# EUROPEAN PATENT SPECIFICATION

(11) **EP 2 698 012 B1**
(45) Date of publication and mention of the grant of the patent: **06.06.2018**
(21) Application number: 11863396.5
(22) Date of filing: 14.04.2011
(51) Int. Cl.: H04W 52/02, H04W 52/22, H04W 56/00, H04L 29/06, H04W 52/28, H04W 74/08

(54) **METHODS AND NETWORK NODES FOR SETTING A TIMEOUT VALUE**
VERFAHREN UND NETZWERKKNOTEN ZUM EINSTELLEN EINES ZEITÜBERSCHREITUNGSWERTES
Procédés et noeuds de réseau pour définir une valeur de temporisation.

(43) Date of publication of application: 19.02.2014
(73) Proprietor: Telefonaktiebolaget LM Ericsson (publ), 164 83 Stockholm (SE)
(72) Inventor: ERIKSSON, Erik, S-585 93 Linköping (SE); RUNE, Johan, S-181 30 Lidingö (SE); WIBERG, Niclas, S-585 97 Linköping (SE)
(74) Representative: Zacco Sweden AB
(86) International application number: PCT/SE2011/050459
(87) International publication number: WO 2012/141630

(56) References cited:
- EP-A1- 1 892 853
- EP-A1- 2 124 375
- EP-A1- 2 365 717
- EP-A2- 2 101 538
- WO-A1-2004/102833
- WO-A1-2007/110483
- WO-A1-2008/104098
- WO-A1-2010/001789
- WO-A2-2011/100596
- GB-A- 2 277 232
- US-A1- 2010 020 786
- CHENGDU, P.R.: 'China Agenda Items 7.1.5.3.2, 7.2.5.2.2.1' 3GPP TSG GERAN#49, TDOC GP-110231 28 February 2011 - 04 March 2011, XP050486508

## Description

### TECHNICAL FIELD

The present disclosure relates to the field of telecommunication. More particularly, the present disclosure relates to a method in a user equipment and a user equipment for setting a timeout value, indicative of a duration during which a value related to a radio transmission is to be reused by the user equipment. Furthermore, the present disclosure relates to a method in a radio network node and a radio network node for setting a timeout value, indicative of a duration during which a value related to a radio transmission is to be reused by a user equipment.

### BACKGROUND

It is envisioned that cellular radio communication systems may comprise huge numbers of small autonomous devices, which transmit and receive transmissions comprising small amounts of data. The small autonomous devices may be sensors or actuators of different kinds. For example, an autonomous device may be a temperature sensor equipped with radio communication capabilities. In the Third Generation Partnership Project (3GPP), the small autonomous devices are sometimes referred to as machine type communication devices (MTC devices).

Transmissions from MTC devices may occur once a month, once a week, once a minute or similar. With reference to the temperature sensor mentioned above, it may be expected that the temperature sensor may be configured to report a current temperature to a server on a daily basis. Generally, the transmissions from MTC devices are expected to be infrequent as compared to other types of mobile terminals, such as cellular phones.

In many scenarios, in which MTC devices are expected to be used, external power supplies may not be available. Again, consider the temperature sensor mentioned above, which may be assumed to be located outside at virtually any position in a city or in the countryside where access to external power supplies typically is not available. Therefore, it is desired that MTC devices are power efficient. Furthermore, replacement of batteries within an MTC device may not be considered to be practically and/or economically feasible. This provides further support for that it is desired that MTC devices are power efficient.

Moreover, it is expected that many MTC devices will have limited mobility. Such MTC devices may be sensors or actuators as mentioned above. However, some MTC devices may be mounted on mobile entities, such as cars or trains.

MTC devices are expected to be employed in Evolved Packet Systems (EPS). An EPS system may comprise a base station, such as an eNB, and a user equipment, such as an MTC device.

In the EPS system, a so called timing advance value determines when the user equipment (UE) transmits in the uplink. The timing advance value determines timing of uplink transmission in relation to the timing of downlink receptions. The purpose is to compensate for different distances for different user equipments to the base station, such that uplink transmissions from the different user equipments arrive time aligned at the base station. Hence, due to the propagation delay the user equipment has to initiate uplink transmissions earlier than implied by the uncompensated timing of downlink receptions. This adjustment of the transmission timing is called timing advance. To maintain a correct timing advance, the base station sends timing advance commands to the user equipment via Media Access Control (MAC) control elements. When initially acquiring uplink synchronization, i.e. acquiring a correct timing advance value for timing of uplink transmissions through the Random Access (RA) procedure, the user equipment receives an absolute timing advance value in the Random Access Response message from the base station. Subsequently, when needed, the base station may send a relative timing advance value, or commands, in a MAC control element, instructing the user equipment how to increase or decrease its existing timing advance value in order to maintain time alignment, where time alignment means that uplink transmissions from different user equipments arrive at the same time at the base station. Time alignment may also be referred to as uplink synchronization. If the base station has not sent a relative timing advance command for some time, a timeout period, e.g. because the user equipment has not transmitted anything in the uplink that the base station can use to determine possible timing advance adjustments, the user equipment is considered to have lost uplink synchronization and needs to receive an absolute timing advance value through a RA procedure in order to be time aligned anew.

When a MTC device is employed in the EPS system, a disadvantage of the above described time alignment is that most MTC device will loose their uplink synchronization, since transmissions to or from the MTC device are expected to be infrequent. Therefore, it is expected that the MTC device need to obtain uplink synchronization through a RA procedure for many of its transmissions. This may lead to a low user data to control signalling ratio, i.e. the amount of user data transmitted is small compared to the amount of control signalling required to transmit the data.

Moreover, power control in the EPS system relates to control of transmission power of the user equipment when sending an uplink transmission. In this context, the transmission power may be referred to as an uplink transmission power. The uplink transmission power is controlled by a combination of configurable parameters, which are broadcast in the system information (SI), an estimate of the downlink path-loss and a relative power adjustment command explicitly signalled from the base station. The estimate is determined by the user equipment based on difference between received power of cell specific reference symbols and system information announced transmission power of said reference symbols. The control of the uplink transmission power is often referred to as uplink power control. The uplink power control includes control of the uplink transmission power for Physical Uplink Control Channel (PUCCH), Physical Uplink Shared Channel (PUSCH) and Sounding Reference Signal (SRS). Transmissions on PUCCH and PUSCH may be power controlled independently of each other, but the SRS power control follows a fixed relation to the PUSCH power control. The explicit relative power adjustment parameter for PUCCH transmissions is signalled to the user equipment in downlink scheduling grants on the PDCCH. The explicit relative power adjustment parameter for PU-SCH transmissions and SRS, on the other hand, is signalled to the user equipment in uplink grants on the PDCCH. In addition, explicit signalling of relative power adjustments for either PUCCH or PUSCH and SRS may also be provided over a dedicated Physical Downlink Control Channel (PDCCH) directed towards multiple user equipments simultaneously.

When a MTC device is employed in the EPS system, a disadvantage of the above described uplink power control may be that the base station may not be able to determine uplink transmission power accurately due to the absence of frequent and/or recent uplink transmissions on which the uplink transmission power may be based. Therefore, the MTC device may either use an unnecessarily high or low uplink transmission power. This may cause undesired cell interference, mainly inter-cell interference, or undesired retransmissions, respectively. Unnecessarily high uplink transmission power of the user equipment, or MTC device, is also unfavourable for battery consumption of the MTC device.

In WO 2010/057540, there is disclosed a method for providing a contention based data transmission from user equipments, herein referred to as contention based access mode. In general, contention based data transmission refers to a transmission mode where a wireless entity, e.g. a user equipment, transmits data without having a dedicated radio resource allocated for this transmission. Instead, a radio resource is used, which may also be used by other wireless entities. If two or more wireless entities simultaneously attempt to transmit data using the same radio resource, a collision occurs (i.e. the transmissions interfere with each other), which typically means that the receiver(s) of the transmissions cannot correctly receive all the transmissions and, in the worst case, fail(s) to correctly receive even one of them. Hence, in order to allow the receiver to correctly receive the data of an incorrectly received transmission, the sender has to retransmit the data. In line with this general description of contention based data transmission, WO 2010/057540 discloses how user equipments are adapted to transmit data using resource blocks allocated by a radio network for contention based data transmission. The radio network is adapted to allocate resource blocks to a dedicated one of the user equipments or to a plurality of user equipments, with the latter being used for contention based data transmission. The radio network node allocates at least one resource block, which will be referred to as a contention based resource in the next paragraph, that is not allocated to any dedicated user equipment, but to a first plurality of the user equipments. The allocation is signalled to the first plurality of user equipments. A first user equipment of said first plurality of user equipments obtains data for transmission and transmits the data while using said at least one resource block. When two or more user equipments of said first plurality of user equipments attempt to transmit data at the same time a collision occurs, i.e. more than one user equipment attempt to access the contention based resource at the same time. A collision frequency may be measured to keep track of how often collisions occur. In this manner, contention based data transmission in the uplink is enabled without prior scheduling request and scheduling grant. As a result, delays in uplink transmission resulting from scheduling request and scheduling grant are reduced.

When a MTC device is employed in a system utilizing such contention based access mode, a disadvantage may be that the MTC device needs to be time aligned, i.e. maintain uplink synchronization, in order to benefit from the contention based access mode. However, since most MTC device are expected to loose uplink synchronization due to its infrequent transmissions, many MTC devices may not be able benefit from the contention based access mode until they have obtained uplink synchronization again.

Hence, there is a need for improvements in order to allow MTC devices to be more efficiently integrated, for example in terms of power consumption, into present radio communication systems.

US20100020786 discloses a timer updated according to the speed of the user equipment.

### SUMMARY

An object is to reduce power consumption of a user equipment, such as an MTC device.

Mobility information may, in some embodiments, comprise at least one of:
- an indicator indicating that the user equipment is stationary,
- information about timing advance values,
- information about transmit power values, and
- a value indicating at least one of a speed, a position and an acceleration of the user equipment.

Since the timeout value is based on the mobility information, the timeout value may be set, or may have been set, such that the value related to radio transmissions needs to be updated less frequently. Therefore, the user equipment, such as an MTC device, may need to update the value related to radio transmissions less frequently. In order to update the value, the user equipment is required to communicate with the radio network node. When the user equipment communicates with the radio network node power of the user equipment is consumed. Therefore, if communication required for updating of the value related to radio transmission may be performed less frequently, power consumption of the user equipment may be reduced. Hence, the above mentioned object is achieved.

Advantageously, reduced power consumption of the user equipment is obtained thanks to less frequent signalling for updating of the value related to radio transmission. As an example, signalling required for obtaining uplink synchronization, such as random access signalling, may be reduced. Thus, as an example, the random access signalling may need to be performed less frequently.

An advantage with some embodiments is that more efficient use of contention based access mode is enabled. As an example, the use of contention based access mode is more efficient in terms of time required for obtaining access as compared to prior art.

An advantage with some embodiments is that reduced power consumption of the user equipment is obtained thanks to use of extended DRX sleep periods.

### BRIEF DESCRIPTION OF THE DRAWINGS

The various aspects of embodiments disclosed herein, including particular features and advantages thereof, will be readily understood from the following detailed description and the accompanying drawings, in which:
Fig. 1 shows a schematic overview of an exemplifying radio communication system with reference to which interaction between a radio network node, a user equipment and a network node will be described,
Fig. 2 shows a schematic, combined signalling and flow chart in conjunction with which exemplifying methods in the radio network node, the user equipment and the network node will be described,
Fig. 3 shows a schematic flow chart of exemplifying methods in the user equipment,
Fig. 4 shows a schematic block diagram of an exemplifying user equipment configured to perform the exemplifying methods illustrated in Fig. 3,
Fig. 5 shows a schematic flow chart of exemplifying methods in the radio network node, and
Fig. 6 shows a schematic block diagram of an exemplifying radio network node configured to perform the exemplifying methods illustrated in Fig. 5.

### DETAILED DESCRIPTION

Throughout the following description similar reference numerals have been used to denote similar elements, network nodes, parts, items or features, when applicable. In the Figures, features that appear in some embodiments are indicated by dashed lines.

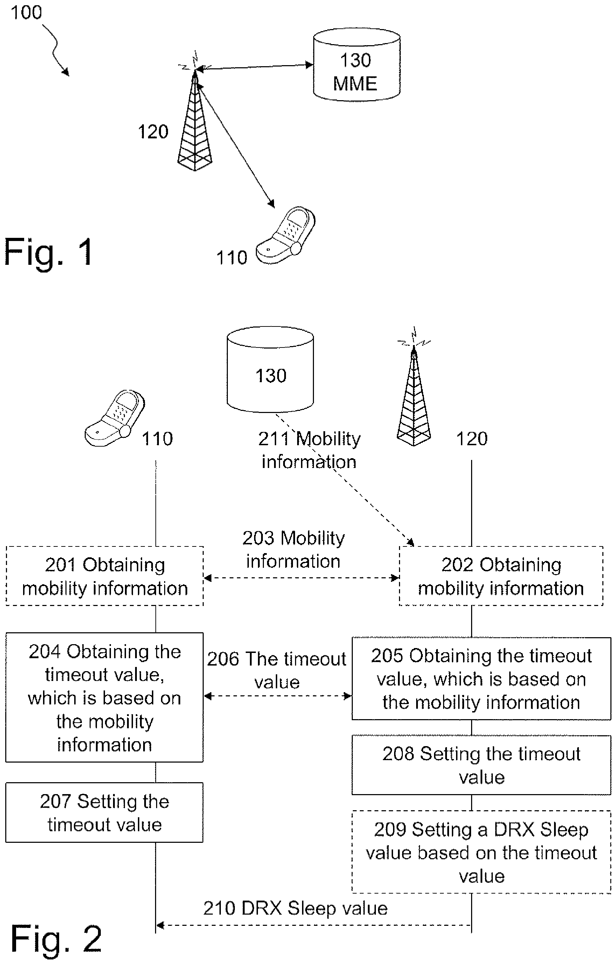

**Fig. 1** shows an exemplifying **radio communication system 100,** such as a Long Term Evolution (LTE) system or the like. Embodiments disclosed herein will be described with reference to the exemplifying radio communication system 100. It may be noted that even though embodiments herein will be described with reference to an LTE system, other embodiments may be construed with reference to any 3GPP cellular system, such as 2G, 3G or 4G, and potentially to any cellular system, in which for example timing advance and/or power control and/or the like are used in uplink transmissions.

In embodiments where the radio communication system 100 is a Third Generation Universal Mobile Telecommunications System (3G UMTS), the concerned Evolved Packet System (EPS) nodes are replaced by corresponding 3G UMTS nodes, e.g. the eNodeB is substituted for the Node B and the MME is substituted for the 3G Serving General Packet Radio Service Support Node (SGSN, where G stands for General Packet Radio Service, or GPRS for short).

In embodiments where the radio communication system 100 is a Second Generation GSM/GPRS system (2G GSM/GPRS), the eNB is substituted for the 2G Base Transceiver Station (BTS) and the MME is substituted for the 2G SGSN.

The radio communication system 100 may comprise **a user equipment 110, a radio network node 120** and **a network node 130.**

The user equipment 110 may be a mobile phone, a cellular phone, a Personal Digital Assistant (PDA) equipped with radio communication capabilities, a smartphone, a laptop equipped with an internal or external mobile broadband modem, a portable electronic radio communication device, a MTC device or the like.

The radio network node 120 may be a radio base station, or shorter base station, such as an eNodeB or eNB for short, a NodeB or a 2G BTS.

The network node 130 may be a Mobility Management Entity (MME), a 3G Serving General Packet Radio Service Support Node (SGSN, where G stands for General Packet Radio Service, or GPRS for short), a 2G SGSN, a Home Subscriber Server (HSS) or the like. Expressed differently, the network node 130 may be configured for handling information about at least one of mobility of the user equipment 110, subscription of the user equipment 110 and user equipment context.

With reference to **Fig. 2****,** there is shown a schematic, combined signalling and flow chart in conjunction with which a number of exemplifying methods in the user equipment 110 for setting a timeout value, indicative of a duration during which a value related to radio transmissions is to be reused, will be described. Moreover, a number of exemplifying methods in the radio network node 120 for setting a timeout value, indicative of a duration during which a value related to radio transmissions is to be reused, will be described with reference to Fig. 2. The radio transmissions may comprise data to be sent from the radio network node 120 to the user equipment 110, or vice versa.

In order to facilitate understanding of actions described with reference to Fig. 2, some terms and expressions will be explained in the following.

The timeout value may be a time alignment timeout value, or uplink synchronization timeout, and the value related to radio transmission may be a timing advance parameter, such as an absolute timing advance value or a relative timing advance value.

Alternatively or additionally, the value related to radio transmission may be an uplink transmission power value, or transmit power value. The uplink transmission power value governs the transmission power the user equipment uses for its uplink transmissions as explained in the following.

As previously described, the timing advance value determines the timing of uplink transmissions, from a user equipment, in relation to the downlink transmission timing as perceived by the user equipment. When the timeout for the valid timing advance value expires for the user equipment, the user equipment performs a random access procedure in order to regain uplink transmission (and thus a new timing advance value) before it may transmit data in the uplink again. Both the user equipment and the radio network node, e.g. a base station or eNodeB, maintain a timer governing the timeout of the user equipment's timing advance value (i.e. the user equipment's uplink synchronization). When the timer expires in the base station, the base station may deallocate any resources that the user equipment can only use when it is uplink synchronized, e.g. an eNodeB may deallocate the user equipment's allocated Physical Uplink Control Channel (PUCCH) resources, thereby making the PUCCH resources available for allocation to some other user equipment. Thus again, the uplink transmission power value governs the transmission power the user equipment uses for its uplink transmissions. The base station controls the user equipment's uplink transmission power through uplink transmission power instructions, typically in the form of relative instructions indicating whether the user equipment should increase or decrease its transmission power or leave it unchanged. Depending on the radio access technology, this type of power control may be important for the base station to ensure that simultaneously received uplink transmissions from multiple user equipments are received with approximately the same power level. This may ensure that one uplink transmission is not so severely interfered by other uplink transmissions, so that the base station fails to receive and decode it properly. Instead the power control may increase the chances that the base station successfully receives and decodes all simultaneously arriving uplink transmissions. In addition, a base station may use power control to reduce the inter-cell interference, i.e. the interference that a user equipment transmitting in one cell may cause to user equipments or base stations in other (neighbouring) cells.

With reference the radio communication system 100 when implemented as an LTE system, the transmit power value may be Physical Uplink Control Channel (PUCCH) transmission power and Physical Uplink Shared Channel with Sounding Reference Signal (PU-SCH + SRS) transmission power. For reasons of simplicity, it is herein not differentiated between these two transmission powers. Both PUCCH transmission power and PU-SCH+SRS transmission power may be referred to as uplink transmission power, or simply transmit power. It should, however, be understood that two independent power control processes, i.e. for PUCCH transmissions on the one hand and for PU-SCH+SRS transmissions on the other hand, shall be handled separately.

The radio network node may store, or request the network node 130, such as an MME, to store, and reuse timeout values and values related the radio transmissions.

As another example, being different from when the value related radio transmissions may be timing advance values or transmission power values and when the timeout value may be the associated timeout values, such as time alignment timeout value, the timeout value and the value related to radio transmission may be a configuration for radio transmission associated with the user equipment over a radio interface. The configuration may include one or more of Inter-Cell Interference Coordination (ICIC) configurations, Coordinated Multi-Point (CoMP) configurations, Multi-User Multiple Input Multiple Output (MU-MIMO) configurations and the like. ICIC configurations may sometimes be referred to as or ICIC schemes.

Briefly, ICIC means that transmissions from other UEs in neighbouring cells are coordinated such as to not occur simultaneously on the same frequency as transmissions from the user equipment 110 served by the radio network node 120. As an example, a specific configuration timeout for ICIC may be set to 5 seconds, 1 hour, infinity or the like. As an example, a specific configuration value for ICIC may be information about on what resources (time and frequency) transmission from UEs in one or more neighbouring cell(s) may be allowed, i.e. specifying time slots, sub-frames, subcarriers or the like.

Briefly, CoMP means that a plurality of base stations, e.g. eNBs, including the radio network node 120, take part in a CoMP communication for the user equipment 110 served by the radio network node 120. As an example, a specific configuration timeout value for CoMP may be set to 5 seconds, 1 hour, infinity or the like. As an example, a specific configuration value for CoMP may be information about transmit power, transport formats and the like, as well as the set of base stations or cells that participate in the communication.

Briefly, MU-MIMO means that a base station, , such as the radio network node 120, e.g. an eNB, transmit to, and/or receive transmissions from, a plurality of UEs, including the user equipment 110, in the same cell, wherein the same or overlapping time and frequency resources are used for the transmissions to the plurality of UEs and the same or overlapping time and frequency resources are used for the transmissions from the UEs to the base station. As an example, a specific configuration timeout value for MU-MIMO may be set to 5 seconds, 1 hour, infinity or the like. As an example, a specific configuration value for MU-MIMO may be a precoding, or beam-forming parameter, used to target the UE 110 during MU-MIMO communication.

These example configurations typically do not involve configuration of the user equipment per se, but concerns only the radio network node, such as an eNB, and its neighbour eNB(s). Neighbours of the radio network node are relevant for ICIC and CoMP configurations.

Therefore, in some embodiments, the radio network node may treat the configuration data individually, referred to as a specific configuration timeout value and a specific configuration value below, when determining whether a configuration, such as the timeout value and the value related to radio transmissions, may be reused. That is, if the radio network node repeatedly arrives at the same, or within a small interval, set of configuration values for a specific configuration, such as timing advance, uplink transmission power where lack of adjustments imply a stable value, ICIC, CoMP, MU-MIMO configuration parameters as above or the like, or otherwise determines that the set of configuration values are, more or less, stable, the radio network node may determine that it is safe to store and reuse the set of configuration values, i.e. reuse the configuration, until a reason to act differently is detected. The reason to act differently may be that the concerned configuration values are no longer stable or that uplink synchronization has been lost or that it is detected, by the user equipment or the radio network node, that the user equipment no longer is stationary, or more or less stationary. The radio network node may do this for any configuration individually or for any combination thereof. Notably, the same set of configuration values may in some embodiments means the same configuration. Herein, the expression "set", when used in the context of denoting amount of a unit, shall be understood to mean "one or more" of said unit. In the context of this paragraph the unit is a configuration value.

Thus, in some embodiments, the timeout value may be a specific configuration timeout value for one or more of
a set of Inter-Cell Interference Coordination configurations,
a set of Coordinated Multi-Point configurations, and
a set of Multi-User Multiple input Multiple Output configurations, and the value related to radio transmissions may be a specific configuration value for one or more of
a set of Inter-Cell Interference Coordination configurations,
a set of Coordinated Multi-Point configurations, and
a set of Multi-User Multiple Input Multiple Output configurations.

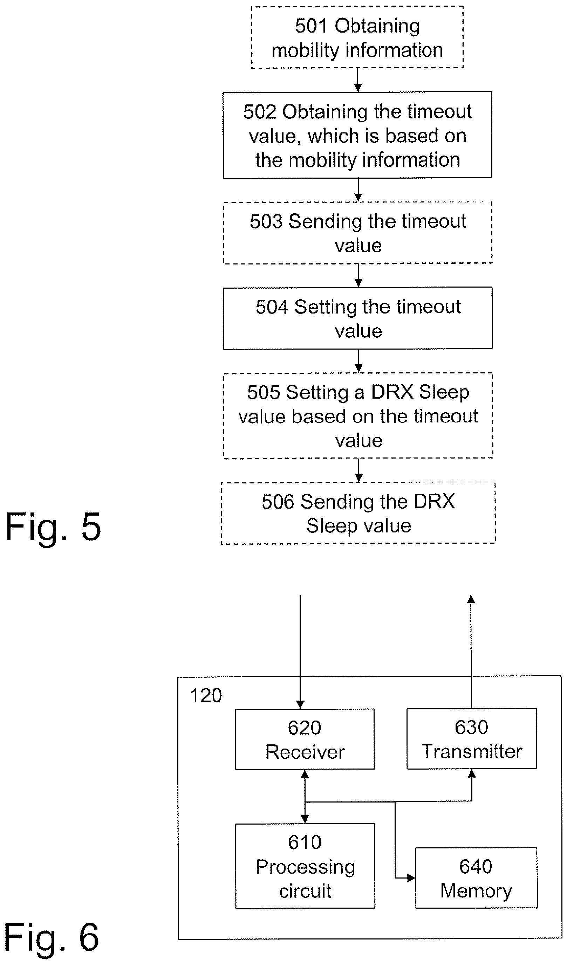

It may here be noted that the timeout value when used with the user equipment may relate to a subset of the configuration(s) or parameters that the timeout value relates to when used with the radio network node. Likewise, the value related to radio transmissions when used with the user equipment may be a subset of the value when used with the radio network node. A configuration timeout value and a configuration value may be defined to comprise the timeout value and the value, respectively, for examples of Fig. 5 and Fig. 6 relating to the radio network node. Accordingly, the configuration timeout value may comprise the timeout value and the configuration value may comprise the value related to radio transmissions. Moreover, the specific configuration timeout value, mentioned above, may be an example of the configuration timeout and the specific configuration value, mentioned above, may be an example of the configuration value.

An advantage with allowing the radio network node to store and reuse the configuration value may be reduced overhead due to reduced signalling for determining the configuration value. As a result of the reduced signalling, a further advantage may be that inter-cell interference may be reduced and/or that energy consumption in the user equipment may be reduced. Generally, an advantage may be that system resources may be used more efficiently as a result of the storing and reusing of the configuration value in the radio network node.

As previously mentioned, the mobility information may comprise at least one of
- an indicator indicating that the user equipment is stationary,
- information about timing advance values relating to a first plurality of previous radio transmissions, wherein the first plurality of previous radio transmissions have been transmitted from the user equipment (110) to the radio network node (120),
- information about transmit power values relating to a second plurality of previous radio transmissions, wherein the second plurality of previous radio transmissions have been transmitted from the user equipment (110) to the radio network node (120), and
- a value indicating at least one of a speed, a position and an acceleration of the user equipment.
The first plurality of previous radio transmissions and the second plurality of previous radio transmissions may be overlapping, such as completely overlapping or partially overlapping. That is to say, information about timing advance values and transmit power values may be collected by the user equipment and/or the radio network node separately or simultaneously.

The indicator indicating that the user equipment is stationary may be indicating that that user equipment is almost stationary, i.e. the speed of the user equipment may on an average be less than a specified threshold value. For example, it may be observed that when the user equipment is moving slowly, such as when a pedestrian carries the user equipment, the user equipment may benefit from having some set of timeout values, whereas it may be observed that when the user equipment is moving fast, such as when the user equipment is located in a car, a train or an aeroplane, the user equipment may benefit from having some other set of timeout values. Thus, as an example, the specified threshold may be set to a speed slightly above an average speed of a pedestrian.

The information about timing advance values may be that the timing advance values are within an interval, i.e. the timing advance values are the same given a certain margin or tolerance of deviation. Hence, statistic or historical information about timing advance values is used to determine whether the user equipment may be assumed to be stationary. The statistic or historical information about timing advance values may be obtained from previous radio transmission between the user equipment and the radio network node. As an example, when each value of a sequence of absolute timing advance values is within a specific interval, i.e. above a lower threshold value and below an upper threshold value, it may be assumed that the user equipment is stationary, or almost stationary.

The information about transmit power values may be that the transmit power values are within an interval, i.e. the transmit power values are the same given a certain margin or tolerance of deviation. Hence, statistic or historical information about transmit power values is used to determine whether the user equipment may be assumed to be stationary. The statistic or historical information about transmit power values may be obtained from previous radio transmission between the user equipment and the radio network node.

Now commencing with a first and a second exemplifying method, which methods will be explained with reference to Fig. 2. The first method is performed by the user equipment 110 and the second method is performed by the radio network node 120. A prerequisite for the first and second methods is that the user equipment 110 and the radio network node 120 have been configured, such as hard-coded or dynamically configured, with information about how the timeout value is determined in the user equipment 110 and the radio network node 120, respectively. Thanks to the information provided to the user equipment 110 and the radio network node 120 via configuration, the user equipment 110 and the radio network node 120 obtain an understanding regarding setting of the timeout value. In the first and second exemplifying methods, the understanding regarding setting of the timeout value may be that a preconfigured timeout value is to be used. From the user equipment's perspective, this may mean that the preconfigured timeout value may be stored in the SIM or USIM. From the radio network node's perspective, this may mean that the timeout value is configured in the radio network node itself or it may be received from, for example, the network node 130 handling information about mobility and subscription of the user equipment and the like information.

For facilitating understanding of the exemplifying methods described with reference to Fig. 2, it may be noted that, as an example, the timeout value may be a time alignment timeout, also known as uplink synchronization timeout, value and the value related to radio transmissions may be a timing advance parameter. Alternatively or additionally, the value related to radio transmission may be an uplink transmission power value, such as transmit power of the user equipment.

Furthermore, as defined above, the configuration timeout value may be an uplink synchronization timeout, also known as time alignment timeout, value, and the configuration value may be a timing advance parameter. Moreover, the configuration value may be transmit power of the user equipment.

In the **first exemplifying method with reference to** **Fig. 2****,** the following actions may be performed by the user equipment 110. Notably, in some embodiments of the method the order of the actions may differ from what is indicated below.

### Action 204

The user equipment 110 obtains the timeout value in that the user equipment 110 retrieves, or reads, the timeout value from a memory comprised in the user equipment 110. The timeout value, stored in the memory, has been determined based on mobility information. The timeout value may be selected from a set of timeout values that may have been configured in the user equipment 110 or sent to it from the radio network node 120 in the form of broadcast system information.

Thus, in some embodiments the user equipment may be configured as being a stationary device. In these embodiments, the mobility information may comprise the indicator indicating that the user equipment is stationary. Moreover, in these embodiments the mobility information, such as the indicator indicating that the user equipment is stationary, may be comprised in subscription information about the user equipment. The subscription information about the user equipment may be retrieved by the user equipment from a memory, such as USIM or SIM. Moreover, the subscription information about the user equipment may be received by the user equipment from the network node 130 handling information about subscription and/or the like.

### Action 207

The user equipment 110 sets, or applies, the timeout value. In this manner, the user equipment may use a longer timeout value than it would have done if it had not been stationary. As an advantageous consequence thereof, the user equipment will not have to update the value related to radio transmission as often as when the user equipment is not stationary, or not almost stationary. This may e.g. allow the user equipment to perform fewer random access procedures, due to reusing a timing advance value for a longer time.

As mentioned above, the user equipment 110 and the radio network node 120 have been configured to obtain an understanding regarding the setting of the timeout value. Thus, when the user equipment 110 performs the first exemplifying method described directly above, the radio network node 120 may perform the **second exemplifying method** described directly below. Notably, in some embodiments of the method the order of the actions may differ from what is indicated below.

### Action 202

The radio network node 120 may obtain the mobility information in that the radio network node 120 receives the mobility information from the network node 130 of Fig. 1, such as an MME.

The radio network node 120 may obtain the mobility information in that the radio network node 120 determines the mobility information. As an example, the radio network node 120 may determine the mobility information by detecting that the user equipment is stationary, or almost stationary. This may, for example, be performed by that the radio network node 120 tracks timing advance values calculated at random access procedures. In this manner, statistics about the timing advance values may be determined. For example, if it is detected that the variance of the timing advance values is less than some threshold value, the user equipment 110 may be considered to be stationary. In addition to the timing advance values calculated at random access procedures, the radio network node 120 may also track the relative timing advance values (e.g. instructions to increase or decrease the timing advance value) that it sends to the user equipment 110. The radio network node may use the relative timing advance values as a complement to the timing advance values calculated at random access procedures when determining whether the user equipment 110 is stationary or almost stationary.

### Action 205

The radio network node 120 obtains the timeout value based on the mobility information in that the radio network node 120 determines the timeout value. As an example, if the radio network node 120 has detected that the user equipment 110 is stationary, or almost stationary, the radio network node may determine the timeout value to be greater than what would be the case for a user equipment which has not been detected as stationary or almost stationary. The timeout value could e.g. be set to 1 hour, 24 hours or infinity. As an advantageous consequence, the user equipment 110 will not have to update the value related to radio transmission as often. This may e.g. allow the user equipment to perform fewer random access procedures, due to reusing a timing advance value for a longer time.

### Action 208

The radio network node 120 sets the timeout value, obtained in action 205.

Now proceeding with a third and a fourth exemplifying method in the user equipment 110 and the radio network node 120, respectively, for which methods the understanding regarding setting of the timeout value may be that a specific formula is used. As an example, the formula may take the mobility information as input and may provide the timeout value as output. An exemplifying formula may be that if four subsequent transmit powers, comprised in the mobility information, are within a fixed, small interval. Then, the timeout value is increased by one step, such as 1 second. Subsequently, for each consecutive set of four transmit powers within the same interval the step may be increased, e.g. doubled each time, for a certain number of consecutive sets.

In the **third exemplifying method** with reference to Fig. 2, the following actions may be performed by the user equipment 110. Notably, in some embodiments of the method the order of the actions may differ from what is indicated below.

### Action 201

The user equipment 110 may obtain mobility information in that the user equipment 110 determines the mobility information.

As an example, the user equipment 110 may determine the mobility information based on information about at least one of timing advance values and transmit power values.

Alternatively or additionally, the user equipment 110 obtains the mobility information in that the user equipment 110 retrieves the mobility information from a memory comprised in the user equipment 110. As an example, the memory may be comprised in a SIM or USIM. The mobility information, stored in the memory, may indicate that the user equipment 110 is stationary, or almost stationary.

### Action 204

The user equipment 110 obtains the timeout value in that the user equipment 110 determines the timeout value based on the mobility information, In this action, the user equipment 110 may use a specific formula as configured in the user equipment to obtain an understanding regarding how to set the timeout value with the radio network node 120.

### Action 207

The user equipment 110 sets, or applies, the timeout value. In this manner, the user equipment may use a longer timeout value than it would have done if it had not been stationary. As an advantageous consequence thereof, the user equipment will not have to update the value related to radio transmission as often as when the user equipment is not stationary, or not almost stationary. This may e.g. allow the user equipment to perform fewer random access procedures, due to reusing a timing advance value for a longer time.

In the **fourth exemplifying method** with reference to Fig. 2, the following actions may be performed by the radio network node 120 when the user equipment 110 performs the actions as described in the third exemplifying method. Notably, in some embodiments of the method the order of the actions may differ from what is indicated below.

### Action 202

The radio network node 120 obtains the mobility information in that the radio network node 120 receives the mobility information from the network node 130 of Fig. 1.

### Action 205

The radio network node 120 may obtain the timeout value in that the radio network node 120 determines the timeout value based on the mobility information. When determining the timeout value, the radio network node 120 may use a specific formula as configured in a preceding action such as to obtain an understanding regarding how to set the timeout value with the user equipment 110.

### Action 208

The radio network node 120 sets the timeout value.

Still referring to Fig. 2, **further exemplifying methods** for setting the timeout value will be described. In these exemplifying methods an understanding between the user equipment and the radio network node regarding setting of the timeout value, i.e. what value to set the timeout value to, is not required, since the timeout value is transmitted between the user equipment and the radio network node. In some embodiment, the user equipment 110 receives and the radio network node 120 sends the timeout value.

The following actions may be performed. Notably, in some embodiments the order of the actions may differ from what is indicated below and/or in the Figure.

### Action 201

The user equipment 110 may obtain mobility information.

The user equipment 110 may obtain mobility information in that the user equipment 110 determines the mobility information.

The user equipment 110 may determine the mobility information based on information about at least one of timing advance values and transmit power values.

Additionally or alternatively, the user equipment 110 may determine the mobility information based information about at least one of speed, position and acceleration of the user equipment 110.

The user equipment 110 may obtain the mobility information in that the user equipment 110 retrieves the mobility information from a memory comprised in the user equipment 110. As an example, the memory may be comprised in a SIM or USIM. The mobility information, stored in the memory, may indicate that the user equipment 110 is stationary.

### Action 203

The user equipment 110 may send and the radio network node 120 may receive the mobility information. Hence, the radio network node 120 obtains the mobility information.

As an example relating to the LTE system of Fig. 1, the user equipment may send the mobility information to the radio network node in the form of one or more parameter of a Radio Resource Control (RRC) message, e.g. a UECapabilitylnformation message in response to a UECapabilityEnquire message or in the form of a UEInformationResponse message in response to a UEInformationRequest message. Furthermore, a new MAC control element may be designed for the sending of the mobility information in a MAC message. In other cellular systems the mobility information may be transferred in RRC messages, with similar or different names and/or format, or in MAC messages with similar or different names and/or formats. The expressions UECapabilityInformation, UECapabilityEnquire, UEInformationResponse, UEInformationRequest etc. are known from 3GPP terminology.

The user equipment may then also inform the radio network node of the uplink synchronization timeout period that it is using. The user equipment may do this even after having sent mobility information to the radio network node, but it may be preferable to send only one of the mobility information and the uplink synchronization timeout period. The radio network node may assign the uplink (UL) synchronization timeout period to the user equipment, e.g. in an RRC message, such as the RRCConnectionReconfiguration message, or in a new MAC control element in a MAC message. The expression RRCConnectionReconfiguration, and the like, is known from 3GPP terminology. Since the radio network node may be aware of the extended (even infinite) UL synchronization timeout period that the user equipment is using, because of the user equipment's low or non-existent mobility, the radio network node is able to treat the user equipment accordingly. That is, the radio network node will not incorrectly deallocate the user equipment's dedicated PUCCH resource after the regular timeout period.

This way of informing the radio network node that the user equipment is stationary is applicable also when the user equipment is configured to be stationary, rather than detecting it through other means. However, in the case when the user equipment is configured as stationary, the radio network node may receive this information from the network node 130, such as an MME, which in turn may have received it from an HSS as a part of the subscriber data that is transferred from the HSS to the MME when the user equipment registers with the MME as part of an attach procedure or tracking area update procedure. See action 211 further below. Attach procedure is known from 3GPP terminology.

### Action 205

The radio network node 120 obtains the timeout value, wherein the timeout value is based on the mobility information.

The radio network node 120 may obtain the timeout value in that the radio network node 120 determines the timeout value based on the mobility information.

As an alternative, the radio network node 120 may obtain the timeout value in that the radio network node 120 receives the timeout value from the user equipment 110. See action 206.

### Action 206

The radio network node 120 may send and the user equipment 110 may receive the timeout value. Thus, the user equipment 110 obtains the timeout value. When this action is performed, the user equipment 110 is not required to be aware of how the timeout value is set. Instead, the user equipment 110 may set, or apply, the timeout value received from the radio network node 120 as described by action 207.

### Action 207

The user equipment 110 sets the timeout value, which may have been received in action 206 or which may have been obtained in action 204.

Again with reference to Fig. 2, **yet other exemplifying methods in user equipment 110** and **yet other exemplifying methods in the radio network node 120** may be described. In these exemplifying methods the user equipment 110 determines the timeout value to be used, or applied, by the user equipment 110 and the radio network node 120.

The following actions may be performed. In some embodiments, the order of the actions may differ from what is illustrated below.

### Action 204

The user equipment 110 may obtain the timeout value according to examples, or embodiments, in which the user equipment 110 determines, rather than receives, the timeout value from the radio network node 120.

In some embodiments, the user equipment 110 obtains the timeout value in that the user equipment 110 determines the timeout value based on the mobility information.

In some embodiments, the user equipment 110 determines the timeout value based on information about at least one of a position, a speed and an acceleration of the user equipment 110. The information may be obtained from a sensor device comprised in the user equipment 110. Moreover, the information may be obtained from a freestanding sensor device, which is able to communicate the information to the user equipment. The sensor device may be a gyro, a GPS unit, a speedometer or the like.

In some embodiments, the user equipment 110 determines the timeout value based on at least one of timing advance values and transmit power values.

### Action 206

The user equipment 110 may send and the radio network node 120 may receive the timeout value.

### Action 207

The user equipment 110 sets the timeout value.

### Action 208

The radio network node 120 sets the timeout value, received in action 206.

According to the exemplifying methods described with reference to Fig. 2 above, the timeout value is be based on mobility information. As an example, if the timeout value is increased, it may be possible to set, or adjust, discontinuous reception (DRX) periods. When a DRX sleep value is less than the timeout value, the value related to radio transmission may be reused frequently. Therefore, an increased timeout value makes it possible to increase the DRX sleep value without having to update the value related to radio transmission as frequently as otherwise would have been the case.

Thus, the following actions, as shown in Fig. 2, may be performed in some embodiments.

### Action 209

The radio network node 120 sets, or adjusts, the DRX sleep value based on the timeout value.

### Action 210

The radio network node 120 sends and the user equipment 110 receives the DRX sleep value, or DRX sleep period. Next, the user equipment 110 may begin to use the DRX sleep value.

By way of the examples above, it has now been described how the user equipment 110 may obtain the mobility information and/or the timeout value.

In the following, benefits of the timeout value based on mobility information will be explained with reference to a specific example, in which the timeout value is a timing alignment timeout, also referred to as uplink synchronization timeout or timing advance timeout. Moreover, in the specific example the value related to radio transmission is a timing advance value.

Knowing itself to be stationary, the user equipment may assume that it is safe to rely on a cached, or stored, timing advance value for a specific time period as given by the timing alignment timeout. As an example, the user equipment, when knowing itself to be stationary, may cache the timing advance value and/or uplink transmission power, or transmit power.

This enables the user equipment, as well as the radio network node, to extend the timing alignment timeout, even making it infinite in some cases. Hence, the user equipment may avoid the overhead of the Random Access procedure even after long periods without uplink transmissions and/or timing advance commands.

Furthermore, this also enables configuration of longer DRX cycles, i.e. specifically longer sleep periods of the DRX cycle without need for Random Access when the user equipment wakes up. Longer sleep periods, or high DRX sleep values, may be particularly beneficial for user equipments, which have a limited power supply, such as a battery. In some situations, it may be economically infeasible to replace the battery due to that the user equipment may be located at a remote location or to due to that there may be huge numbers of user equipments.

In addition, the user equipment is able to postpone, possibly even indefinitely, loss of uplink synchronization. Therefore, the user equipment may have more opportunities to use a contention based access mode when available. As an example, it is to be understood that the user equipment needs to be time aligned in order to make use of the contention based access mode.

Similarly, relying on its own mobility being the most important circumstance that impacts radio conditions, a stationary user equipment may consider it safe to rely on a cached uplink transmission power value and use this for its next uplink transmission, possibly adapted to the particular transmission type, i.e. PUCCH, PU-SCH+SRS or Physical Random Access Channel (PRACH), even if an extensive time period has elapsed and even if a preamble transmission on the PRACH turns out to be the next uplink transmission.

As has been described above, the user equipment is not configured as stationary according to some embodiments. Instead, the user equipment relies on a self-learning capability for autonomously determining the mobility information. The mobility information may be determined autonomously in that the user equipment may determine the mobility information without involvement of the radio network node.

For example, if the timing advance value, as an example of a value related to radio transmission, remains stable (exactly the same or varying within a limited interval) for a specific time period, and/or if the timing advance value consistently settles at the same, or approximately the same (e.g. within a limited interval) value after Random Access procedures, the user equipment may determine that it may consider itself as stationary, or almost stationary. The specific time period may be predetermined or dynamically adjustable. The user equipment may also consider how many uplink transmissions it has performed during this specific time period, e.g. such that at least two uplink transmissions have been performed wherein the time period between the first and the last of these at least two transmissions is equal to or greater than the specific time period. As an example, the user equipment may determine that it is stationary, or almost stationary, if the timing advance value has remained within an interval of 1 µs (microsecond) for at least two uplink transmissions wherein the time period between the first and the last of these at least two uplink transmissions is equal to or greater than 30 minutes.

In some embodiments, the user equipment may monitor uplink transmission power values in a similar way as the timing advance values. The result of such monitoring of the uplink transmission power value, being an example of the transmit power value, may be combined with information about the timing advance value described in the paragraph directly above. In this manner, more accurate mobility information may obtained as compared to mobility information not based on the combination of timing advance values and transmit power values. As an example, the user equipment may consider itself as stationary only if both the timing advance value and the uplink transmission power value remain stable for a specific time period and a minimum number of uplink transmissions. For the uplink transmission power value a condition may be, similarly to a condition for the timing advance value described above, that the uplink transmission power value remains stable, such as exactly the same or varying within a limited interval, and/or consistently settles at the same, or approximately the same (e.g. within a limited interval), value after a convergence period of power control commands. The number of uplink transmissions during the time period may also be considered as described above.

In some embodiments, the user equipment may handle the liming advance values and uplink transmission power values independently. Thus, if the timing advance value remains stable, as described above, the user equipment may assume that it is safe to rely on an old cached timing advance value for an extended time period. Similarly, if the uplink transmission power value remains stable, or consistently settles at approximately the same value after a convergence period of power control commands, the user equipment may consider it safe to rely on an old cached uplink transmission power value and use this for its next uplink transmission (adapted to the particular transmission type, i.e. PUCCH, PU-SCH/SRS or PRACH), even if an specific time period has elapsed and even if a preamble transmission on the Physical Random Access Channel (PRACH) turns out to be the next uplink transmission.

In some embodiments, the user equipment may not detect its own low or inexistent mobility, but instead the radio network node, such as an eNB, detects that the user equipment is stationary, or almost stationary, i.e. the radio network node determines the mobility information. By tracking timing advance values calculated at Random Access procedures and potentially also accumulated relative timing advance adjustment commands and/or accumulated relative power adjustment commands or the variability of received transmission power, a radio network node may determine that the user equipment is stationary. Principles for determining mobility information based on timing advance values and/or transmit power values may be the same or similar as described for when the user equipment autonomously determines the mobility information. As an exemplifying principle, it may be assumed that sufficiently consistent or stable values imply a non-moving user equipment.

When it is detected that the user equipment is stationary, or almost stationary, the radio network node informs the user equipment that it should reuse timing advance values and/or uplink transmission power values for extended time periods and accept extended DRX cycles with extended sleep periods. This includes transferring timeout value(s), e.g. an UL synchronization timeout value, to be used by the user equipment, unless this information is conveyed to the user equipments through other means, such as via broadcast system information (SI) or pre-configuration.

Embodiments, in which the mobility information is determined by the radio network node, may further provide procedures for storing of timeout values and values related to radio transmission and possibly associated information. As an example, a timing advance value and an uplink synchronization timeout value may be stored, or saved, for use in several sessions of RRC_CONNECTED state. Together with the user equipment's last used timing advance value associated information about the recent stability/variability of the timing advance value may be stored, e.g. in terms of the timing advance values used during the last time period of a certain length, e.g. one hour, in RRC_CONNECTED state, or the historical variance of the timing advance values, e.g. measured during the last time period of a certain length, e.g. one hour. Hence, the timeout value and the value related to radio transmission and possible associated information may be stored in the radio communication system, such as in a network node of the radio communication system, when the user equipment is in RRC_IDLE state. As a result, the timeout value and the value related to radio transmission and associated information may again be available to the user equipment when the user equipment returns to RCC_CONNECTED state. In this manner, the tracking of the timing advance value of the user equipment is not limited to a single RRC_CONNECTED state session, which in itself may be rather long - at least if extended DRX cycles are used, but may extend across multiple RRC_CONNECTED state sessions separated by RRC_IDLE state periods. This context may be administered in many different manners, involving the radio network node and/or the network node. This will be described further below with reference to a specific example relating to timing advance context.

In some embodiments, positioning services or the like may be used to determine the mobility information. Although this may be associated with a greater overhead in terms of processing and signalling, utilization of user equipment positioning, or positioning services, such as Location Services (LCS), instead of tracking of timing advance values and/or transmit power values for determining whether the user equipment is stationary, or almost stationary, or not stationary at all may be considered. It may be that improved accuracy may be obtained if positioning service are used for determining of the mobility information. The measurement results may be stored in the radio network node 120 and/or the network node 130 as for the timing advance information, i.e. timing advance value and uplink synchronization timeout value.

As an example, the radio network node may receive a request for measurement of the position of the user equipment from the network node 130, as an example of a node in a core network, at every RRC_IDLE state to RRC_CONNECTED state transition and compare the result with the previous value (and possible associated historical position data such as multiple measurement results or the variance of a certain number of historical results) received from the MME in the INITIAL CONTEXT SETUP REQUEST message. Furthermore, the radio network node may also periodically request measurements, or request periodic measurements, while the user equipment is in RRC_CONNECTED state.

The request for measurement of a position of the user equipment may be sent from the radio network node to the MME, which in turn communicate with an Evolved Serving Mobile Location Center (E-SMLC), or transparently via the MME send the request to the E-SMLC, e.g. using an extension of LTE Positioning Protocol Annex (LPPa) or a Gateway Mobile Location Center (GMLC). Thereby, mobility information may be based on information from positioning services.

In some embodiments, the timeout value and the value relating to radio transmission may be related to timing advance, i.e. a timing advance context comprising the timing alignment timeout and the timing advance value may be stored for use in a plurality of RCC_CONNECTED state sessions. As will be explained in the two following sections, the timing advance context may be stored in the radio network node 120 or in a core network node, such as the network node 130 of Fig. 1.

When the user equipment is in RRC_IDLE state, its timing advance value is stored in the radio network node, keyed by, i.e. identified by, the S-TMSI of the user equipment. The S-TMSI may be supplied to the radio network node in the RRCConnectionRequest message, which is sent in the RA procedure during transition from RRC_IDLE to RRC_CONNECTED state. The radio network node stores the user equipment's last used timing advance value together with information about detected stability/variability of the timing advance value. The information about detected stability/variability may comprise timing advance values used during a specific time period, such as one hour, in RRC_CONNECTED state. Furthermore, the information about detected stability/variability may comprise a value indicating variance of the timing advance value measured during the specific time period.

This type of storage in the radio network node is applicable also to information about detected variability, or stability, of the uplink transmission power as perceived by the radio network node, e.g. reflected as the recent history of power adjustment commands or a measure of the variability, such as a value indicating variance, of the recent history of accumulated power adjustment commands or a similar measure of the variability of the recent history of received transmission power from the user equipment. It may be noted that this type of storage in the radio network node requires the radio network node to store information about the context of the user equipment also while the user equipment is in RRC_IDLE state, such as information about the timing advance context. According to present standards, no user equipment related context is stored in the radio network node while the user equipment is in RRC_IDLE state. Therefore, the information about the timing advance context may be stored in a network node according to some embodiments as described in the following.

The timing advance context may be stored in a core network node, typically the MME, where other context data already is stored even when the user equipment is in RRC_IDLE state. The radio network node may track the timing advance value of the user equipment while the user equipment is in RRC_CONNECTED state and the radio network node may transmit the timing advance information to the MME for storing when the user equipment is in RRC_IDLE state. Moreover, the MME may also store the timing advance information when the user equipment is in RRC_CONNECTED state. The radio network node may send the timing advance context to the MME in the UE CONTEXT RELEASE REQUEST message. However, any other S1 Application Protocol (S1AP) message may be utilized by the radio network node for sending of the timing advance context to the MME.

When the user equipment subsequently transits to RRC_CONNECTED state the MME returns the timing advance context to the radio network node in the INITIAL CONTEXT SETUP RELEASE message, together with the regular user equipment context data that is included in that message. The radio network node may then compare the received timing advance context with a current timing advance value, which the radio network node has calculated for the user equipment based on reception of a random access preamble as part of the random access procedure. In this manner, the tracking, or detection, of the timing advance values may continue seamlessly across multiple separate RRC_CONNECTED state sessions.

This type of transfer and storage is applicable also to information about detected variability, or stability, of the uplink transmission power as perceived by the radio network node, e.g. reflected as the recent history of power adjustment commands or a measure of the variability, such as a value indicating variance, of the recent history of accumulated power adjustment commands or a similar measure of the variability of the recent history of received transmission power from the user equipment.

Once more with reference to Fig. 2, the actions will be described while summarizing a plurality of exemplifying methods.

### Action 201

In some embodiments, the user equipment 110 obtains the mobility information.

In some embodiments, the user equipment 110 obtains the mobility information in that the user equipment 110 determines the mobility information based on information about at least one of:
- timing advance values relating to a first plurality of previous radio transmissions, wherein the first plurality of previous radio transmissions have been transmitted from the user equipment 110 to the radio network node 120,
- transmit power values relating to a second plurality of previous radio transmissions, wherein the second plurality of previous radio transmissions have been transmitted from the user equipment 110 to the radio network node 120, and
- at least one of a speed, a position and an acceleration of the user equipment 110.

In some embodiments, the user equipment 110 obtains the mobility information in that the user equipment 110 reads the mobility information from a memory comprised in the user equipment 110.

In some embodiments, the user equipment 110 obtains the mobility information in that the user equipment 110 receives the mobility information from the radio network node 120. The radio network node 120 may have received the mobility information from the network node 130 handling information about mobility and subscription of the user equipment 110.

### Action 202

In some embodiments, the radio network node 120 obtains the mobility information.

In some embodiments, the radio network node 120 obtains the mobility information in that the radio network node 120 receives the mobility information from the user equipment 110 or from a network nude 130 handling information about at least one of:
mobility of the user equipment 110,
subscription of the user equipment 110, and
user equipment context of the user equipment 110.
Regarding the information that the radio network node 120 may receive from the network node 130, this may include information about the mobility of the user equipment 110, deduced from subscription data e.g. stating that the subscription will only be used for a stationary device. Information about the user equipment context may include similar information or information about previous mobility history during the current attachment session or information in the form of data related to the determination of the timeout value or the value related to radio transmission or data related to the determination of the mobility of the user equipment that the radio network node 120 may previously have stored in the network node 130.

In some embodiments, the radio network node 120 obtains the mobility information in that the radio network node 120 determines the mobility information based on timing advance values and/or values related to the transmit power of the radio transmission when transmitted by the user equipment 110.

### Action 203

In some embodiments, the user equipment 110 sends the mobility information to the radio network node 120 serving the user equipment 110.

In some embodiments, the radio network node 120 may send and the user equipment 110 may receive the mobility information. The timeout value may be derived from the mobility information. This may, for example, be advantageous if the radio network node 120 has obtained the mobility information in that the radio network node 120 has received the mobility information from the network node 130 of Fig. 1 according to action 211. The user equipment 110 may obtain thus receive the mobility information and then derive the timeout value from the received mobility information.

### Action 204

The user equipment 110 obtains the timeout value, wherein the timeout value is based on the mobility information indicating mobility of the user equipment 110.

In some embodiments, the user equipment 110 obtains the timeout value in that the user equipment 110 determines the timeout value based on the mobility information.

In some embodiments, the user equipment 110 determines the timeout value based on information about position, speed and/or acceleration of the user equipment 110. The information may be obtained from a sensor device comprised in the user equipment 110. Moreover, the information may be obtained from a freestanding sensor device, which is able to communicate the information to the user equipment. The sensor device may be a gyro, a GPS unit, a speedometer or the like.

In some embodiments, the user equipment 110 determines the timeout value based on timing advance values and/or transmit power values.

In some embodiments, the user equipment 110 obtains the timeout value in that the user equipment 110 receives the timeout value from the radio network node 120. The timeout value may be determined by the radio network node 120.

In some embodiments, the user equipment 110 obtains the timeout value in that the user equipment 110 reads the timeout value from a memory comprised in the user equipment 110. The memory may be a USIM.

In some embodiments, the user equipment 110 may select the timeout value from a set of timeout values that may have been configured in the user equipment 110 or sent to it from the radio network node 120 in the form of broadcast system information.

### Action 205

The radio network node 120 obtains the timeout value. The timeout value is based on mobility information indicating mobility of the user equipment 110.

In some embodiments, the radio network node 120 may obtain the timeout value in that the radio network node 120 determines the timeout value based on the mobility information.

In some embodiments, the radio network node 120 may obtain the timeout value in that the radio network node 120 receives the timeout value from the user equipment 110 or from the network node 130.

### Action 206

In some embodiments, the radio network node 120 sends the timeout value to the user equipment 110. The timeout value may in these embodiments be determined by the radio network node 120.

In some embodiments, the radio network node 120 receives the timeout value from the user equipment 110. The timeout value may in these embodiments be determined by the user equipment 110.

### Action 207

The user equipment 110 sets the timeout value, which the user equipment 110 may have obtained according to any of the manners as described in action 204. Expressed somewhat differently, the user equipment 110 applies, or uses, the timeout value. As an example, the timeout value may be used for the purpose of determining a time period before the user equipment may loose uplink synchronization.

### Action 208

The radio network node 120 sets the timeout value for the user equipment 110. The timeout value may have been obtained by the radio network node 120 according to any of the manners as described in action 205. Expressed somewhat differently, the radio network node 120 applies, or uses, the timeout value. As an example, the timeout value may be used for the purpose of determining a time period before the radio network node 120 may consider uplink synchronization for the user equipment 110 to have been lost.

### Action 209

In some embodiments, the radio network node 120 sets a DRX sleep value based on the timeout value.

### Action 210

In some embodiments, the radio network node 120 sends and the user equipment 110 receives the DRX sleep value.

### Action 211

In some embodiments, the network node 130 sends and the radio network node 120 receives the mobility information.

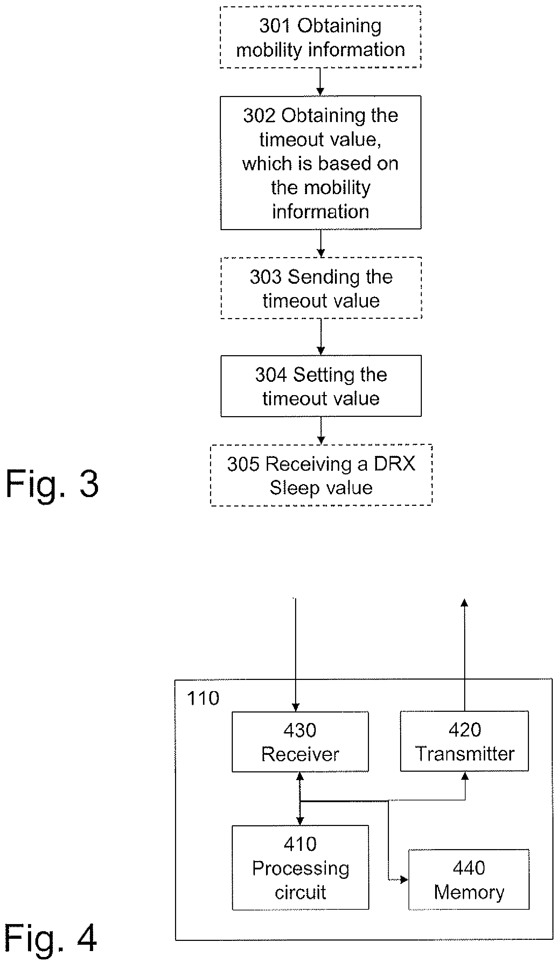

In **Fig. 3****,** there is shown an exemplifying, schematic flow chart of exemplifying methods as illustrated in and described with reference to Fig. 2 when seen from the user equipment 110. Hence, in Fig. 3 there is shown exemplifying methods in the user equipment 110 of Fig. 1 for setting a timeout value, indicative of a duration during which a value related to radio transmissions is to be reused, or is reusable, by the user equipment 110. As mentioned above, the radio transmissions relate to communication between the user equipment 110 and a radio network node 120. Also as mentioned above, the user equipment 110 and the radio network node 120 are comprised in a radio communication system 100.

The following actions, such as steps, may be performed. Notably, in some embodiments of the method the order of the actions may differ from what is indicated below.

### Action 301

This action is similar to action 201.

In some embodiments of the method in the user equipment 110, the user equipment 110 obtains the mobility information.

In some embodiments of the method in the user equipment 110, the user equipment 110 obtains the mobility information in that the user equipment 110 determines the mobility information based on information about at least one of:
- timing advance values relating to a first plurality of previous radio transmissions, wherein the first plurality of previous radio transmissions have been transmitted from the user equipment 110 to the radio network node 120,
- transmit power values relating to a second plurality of previous radio transmissions, wherein the second plurality of previous radio transmissions have been transmitted from the user equipment 110 to the radio network node 120, and
- at least one of a speed, a position and an acceleration of the user equipment 110..

In some embodiments of the method in the user equipment 110, the user equipment 110 obtains the mobility information in that the user equipment 110 reads the mobility information from a memory comprised in the user equipment 110.

In some embodiments of the method in the user equipment 110, the user equipment 110 obtains the mobility information in that the user equipment 110 receives the mobility information from the radio network node 120 serving the user equipment 110. The radio network node 120 may have received the mobility information from the network node 130 handling information about mobility and subscription of the user equipment 110.

### Action 302

This action is similar to action 204.

The user equipment 110 obtains the timeout value, wherein the timeout value is based on the mobility information indicating mobility of the user equipment 110.

In some embodiments of the method in the user equipment 110, the user equipment 110 obtains the timeout value in that the user equipment 110 determines the timeout value based on the mobility information.

In some embodiments of the method in the user equipment 110, the user equipment 110 determines the timeout value based on information about at least one of:
- timing advance values relating to a first plurality of previous radio transmissions, wherein the first plurality of previous radio transmissions have been transmitted from the user equipment (110) to the radio network node (120),
- transmit power values relating to a second plurality of previous radio transmissions, wherein the second plurality of previous radio transmissions have been transmitted from the user equipment (110) to the radio network node (120), and
- at least one of a speed, a position and an acceleration of the user equipment (110).

When the information is about at least one of a speed, a position and an acceleration of the user equipment (110), the information may be obtained from a sensor device comprised in the user equipment 110. Moreover, the information may be obtained from a freestanding sensor device, which is able to communicate the information to the user equipment. The sensor device may be a gyro, a GPS unit, a speedometer or the like.

In some embodiments of the method in the user equipment 110, as mentioned above, the user equipment 110 determines the timeout value based on timing advance values and/or transmit power values.

In some embodiments of the method in the user equipment 110, the user equipment 110 obtains the timeout value in that the user equipment 110 receives the timeout value from the radio network node 120. The timeout value may be determined by the radio network node 120.

In some embodiments of the method in the user equipment 110, the user equipment 110 obtains the timeout value in thai the user equipment 110 reads the timeout value from a memory comprised in the user equipment 110. The memory may be a USIM.

In some embodiments of the method in the user equipment 110, the user equipment 110 may select the timeout value from a set of timeout values that may have been configured in the user equipment 110 or sent to it from the radio network node 120 in the form of broadcast system information.

### Action 303

This action is similar to action 206.

In some embodiments of the method in the user equipment 110, the user equipment 110 sends the timeout value to the radio network node 120. The timeout value may in these embodiments be determined by the user equipment 110.

As mentioned above in action 204 the user equipment 110 may receive the timeout value from the radio network node 120.

### Action 304

This action is similar to action 207.

The user equipment 110 sets the timeout value, which the user equipment 110 may have obtained according to any of the manners as described in action 204. Expressed somewhat differently, the user equipment 110 applies, or uses, the timeout value. As an example, the timeout value may be used for the purpose of determining a time period before the user equipment may loose uplink synchronization.

### Action 305

This action is similar to action 210.

In some embodiments of the method in the user equipment 110, the user equipment 110 receives a DRX sleep value from the radio network node 120.

With reference to **Fig. 4****,** there is shown a schematic block diagram of the user equipment 110 configured to perform the actions illustrated in and described with reference to Fig. 3. Moreover, the user equipment 110 is configured to perform the actions performed by the user equipment 110 as shown in Fig. 2. The user equipment 110 is configured to perform a method for setting a timeout value, indicative of a duration during which a value related to radio transmission is to be reused. Similarly to what was mentioned in conjunction with Fig. 3, the radio transmissions relate to communication between the user equipment 110 and the radio network node 120. Also similarly to what was mentioned in conjunction with Fig. 3, the user equipment 110 and the radio network node 120 are configured for being comprised in the radio communication system 100. Expressed differently, the user equipment 110 and the radio network node 120 are configured to be operated in the radio communication system 100.

The user equipment 110 comprises **a processing circuit 410** configured to obtain the timeout value, the timeout value is based on mobility information indicating mobility of the user equipment 110, and wherein the processing circuit 410 further is configured to set the timeout value.

In some embodiments of the user equipment 110, the processing circuit 410 further is configured to obtain the mobility information.

In some embodiments of the user equipment 110, the processing circuit 410 further is configured to determine the mobility information based on information about at least one of:
- timing advance values relating to a first plurality of previous radio transmissions, wherein the first plurality of previous radio transmissions have been transmitted from the user equipment (110) to the radio network node (120),
- transmit power values relating to a second plurality of previous radio transmissions, wherein the second plurality of previous radio transmissions have been transmitted from the user equipment (110) to the radio network node (120), and
- at least one of a speed, a position and an acceleration of the user equipment (110).

The processing circuit 410 may be a processing unit, a processor, an application specific integrated circuit (ASIC), a field-programmable gate array (FPGA) or the like. As an example, a processor, an ASIC, an FPGA or the like may comprise one or more processor kernels.

In some embodiments of the user equipment 110, the user equipment 110 further comprises **a transmitter 420** configured to send the mobility information to the radio network node 120 serving the user equipment 110.

Moreover, the transmitter 420 may be configured to send the timeout value to the radio network node 120 according to some embodiments.

In some embodiments of the user equipment 110, the user equipment 110 further comprises **a receiver 430** configured to receive the timeout value from the radio network node 120 serving the user equipment 110.

Moreover, the receiver 430 may be configured to receive the mobility information from the radio network node 120 according to some embodiments.

In some embodiments of the user equipment 110, the receiver 430 may further be configured to receive a DRX sleep value from the radio network node 120.

In some embodiments of the radio network node 110, the user equipment 110 may further comprise **a memory 440** for storing software to be executed by, for example, the processing circuit. The software may comprise instructions to enable the processing circuit to perform the method in the user equipment 110 as described above in conjunction with Fig. 3. The memory 440 may also be used for storing mobility information and/or timeout values and/or values related to radio transmission. The memory 440 may be a hard disk, a magnetic storage medium, a portable computer diskette or disc, flash memory, random access memory (RAM), a portion of a subscriber identity module or the like. Furthermore, the memory may be an internal register memory of a processor.

Now turning to **Fig. 5****,** there is shown an exemplifying, schematic flow chart of exemplifying methods as illustrated in and described with reference to Fig. 2 when seen from the radio network node 120. Hence, in Fig. 5 there is shown exemplifying methods in the radio network node 120 for setting a timeout value, indicative of a duration during which a value related to radio transmissions is to be reused, or is reusable. As mentioned, the value related to the radio transmissions relates to communication with a user equipment 110. As mentioned above, the radio network node 120 and the user equipment 110 are comprised in a radio communication system 100.

The following actions, such as steps, may be performed. Notably, in some embodiments of the method the order of the actions may differ from what is indicated below.

### Action 501

This action is similar to action 202.

In some embodiments of the method in the radio network nude 120, the radio network node 120 obtains the mobility information.

In some embodiments of the method in the radio network node 120, the radio network node 120 obtains the mobility information in that the radio network node 120 receives the mobility information from the user equipment 110 or from a network node 130 handling information about at least one of:
mobility of the user equipment 110,
subscription of the user equipment 110, and
user equipment context of the user equipment 110.

When the radio network node 120 receives the mobility information from the network node 130, reference is made to action 211 above.

In some embodiments of the method in the radio network node 120, the radio network node 120 obtains the mobility information in that the radio network node 120 determines the mobility information based on information about at least one of:
- timing advance values relating to a first plurality of previous radio transmissions, wherein the first plurality of previous radio transmissions have been transmitted from the user equipment (110) to the radio network node (120),
- transmit power values relating to a second plurality of previous radio transmissions, wherein the second plurality of previous radio transmissions have been transmitted from the user equipment (110) to the radio network node (120), and
- at least one of a speed, a position and an acceleration of the user equipment (110).

### Action 502

This action is similar to action 205.

The radio network node 120 obtains the timeout value. The timeout value is based on mobility information indicating mobility of the user equipment 110.

### Action 503

This action is similar to action 206.

In some embodiments of the method in the radio network node 120, the radio network node 120 sends the timeout value to the user equipment 110.

### Action 504

This action is similar to action 208.

The radio network node 120 sets the timeout value for the user equipment 110. The timeout value may have been obtained by the radio network node 120 according to any of the manners as described in action 205. Expressed somewhat differently, the radio network node 120 applies, or uses, the timeout value. As an example, the timeout value may be used for the purpose of determining a time period before the radio network node 120 may consider uplink synchronization for the user equipment 110 to have been lost.

### Action 505

This action is similar to action 209.

In some embodiments of the method in the radio network node 120, the radio network node 120 sets a DRX sleep value based on the timeout value.

### Action 506

This action is similar to action 210.

In some embodiments of the method in the radio network node 120, the radio network node 120 sends the DRX sleep value to the user equipment 110.

With reference to **Fig. 6****,** there is shown a schematic block diagram of the radio network node 120 configured to perform the actions illustrated with reference to Fig. 5. Moreover, the radio network node is configured to perform the actions performed by the radio network node 120 as shown in Fig. 2. The radio network node 120 is configured to perform a method for setting a timeout value, indicative of a duration during which a value related to radio transmission is to be reused, or is reusable. Similarly to what was mentioned in conjunction with Fig. 5, the value related to the radio transmissions relates to communication with the user equipment 110. Also similarly to what was mentioned in conjunction with Fig. 5, the user equipment 110 and the radio network node 120 are configured for being comprised in the radio communication system 100.

The radio network node 120 comprises **a processing circuit 610** configured to obtain the timeout value. The processing circuit 610 further is configured to set the timeout value for the user equipment 110 based on the mobility information.

In some embodiments of the radio network node 120, the processing circuit G10 further is configured to determine the mobility information based on information about at least one of:
- timing advance values relating to a first plurality of previous radio transmissions, wherein the first plurality of previous radio transmissions have been transmitted from the user equipment (110) to the radio network node (120),
- transmit power values relating to a second plurality of previous radio transmissions, wherein the second plurality of previous radio transmissions have been transmitted from the user equipment (110) to the radio network node (120), and
- at least one of a speed, a position and an acceleration of the user equipment (110).

In some embodiments of the radio network node 120, the processing circuit 610 further is configured to set a DRX sleep value based on the timeout value.

The processing circuit 610 may be a processing unit, a processor, an application specific integrated circuit (ASIC), a field-programmable gate array (FPGA) or the like. As an example, a processor, an ASIC, an FPGA or the like may comprise one or more processor kernels.

In some embodiments of the radio network node 120, the radio network node 120 further comprises **a receiver 620** configured to receive the mobility information from the user equipment 110 or from a network node 130 handling information about at least one of mobility of the user equipment 110, subscription of the user equipment 110 and user equipment context of the user equipment 110.

In some embodiments of the radio network node 120, the radio network node 120 further comprises **a transmitter 630** configured to send the timeout value to the user equipment 110.

Moreover, the transmitter 630 may be configured to send the mobility information to the user equipment 110 according to some embodiments.

In some embodiments of the radio network node 120, the transmitter 630 further is configured to send the DRX sleep value to the user equipment 110.

In some embodiments of the radio network node 120, the radio network node 120 may further comprise **a memory 640** for storing software to be executed by, for example, the processing circuit. The software may comprise instructions to enable the processing circuit to perform the method in the radio network node 120 as described above in conjunction with Fig. 5. The memory 640 may also be used for storing data related to the timeout value and/or the value related to radio transmission and/or data related to the mobility of the user equipment 110. The memory 440 may be a hard disk, a magnetic storage medium, a portable computer diskette or disc, flash memory, random access memory (RAM), a portion of a subscriber identity module or the like. Furthermore, the memory may be an internal register memory of a processor.

Even though a plurality of embodiments has been described, many different alterations, modifications and the like thereof will become apparent for those skilled in the art. The described embodiments are therefore not intended to limit the scope of the present disclosure.

## Claims

1. A method for a user equipment (110) for setting a timeout value, indicative of a duration during which a value related to radio transmissions is to be reused by the user equipment (110), wherein the radio transmissions relate to communication between the user equipment (110) and a radio network node (120), wherein the user equipment (110) and the radio network node (120) are comprised in a radio communication system (100), wherein the method comprises:
obtaining (204) a timeout value, wherein the timeout value is based on mobility information indicating mobility of the user equipment (110), wherein the mobility information comprises information about transmit power values relating to a second plurality of previous radio transmissions, wherein the second plurality of previous radio transmissions have been transmitted from the user equipment (110) to the radio network node (120); and
setting (207) the timeout value.

2. The method for the user equipment (110) according to claim 1, wherein the mobility information further comprises at least one of:
an indicator indicating that the user equipment is stationary,
information about timing advance values relating to a first plurality of previous radio transmissions, wherein the first plurality of previous radio transmissions have been transmitted from the user equipment (110) to the radio network node (120),
and
a value indicating at least one of a speed, a position and an acceleration of the user equipment.

3. The method for the user equipment (110) according to claim 1, further comprising:
obtaining (201) the mobility information.

4. The method for the user equipment (110) according to claim 3, wherein the obtaining (201) of the mobility information comprises
determining the mobility information based on information about at least one of:
timing advance values relating to a first plurality of previous radio transmissions, wherein the first plurality of previous radio transmissions have been transmitted from the user equipment (110) to the radio network node (120),
transmit power values relating to a second plurality of previous radio transmissions, wherein the second plurality of previous radio transmissions have been transmitted from the user equipment (110) to the radio network node (120), and
at least one of a speed, a position and an acceleration of the user equipment (110).

5. A user equipment (110) for setting a timeout value, indicative of a duration during which a value related radio transmissions is to be reused by the user equipment (110), wherein the radio transmissions relate to communication between the user equipment (110) and a radio network node (120), wherein the user equipment (110) and the radio network node (120) are configured for being comprised in a radio communication system (100), wherein the user equipment (110) comprises
a processing circuit (410) configured to obtain a timeout value, wherein the timeout value is based on mobility information indicating mobility of the user equipment (110), wherein the mobility information comprises information about transmit power values relating to a second plurality of previous radio transmissions, wherein the second plurality of previous radio transmissions have been transmitted from the user equipment (110) to the radio network node (120), and wherein the processing circuit (410) further is configured to set the timeout value.

6. The user equipment (110) according to claim 5, wherein the mobility information further comprises at least one of:
an indicator indicating that the user equipment is stationary,
information about timing advance values relating to a first plurality of previous radio transmissions, wherein the first plurality of previous radio transmissions have been transmitted from the user equipment (110) to the radio network node (120),
and
a value indicating at least one of a speed, a position and an acceleration of the user equipment.

7. The user equipment (110) according to claim 5, wherein the processing circuit (410) further is configured to obtain the mobility information.

8. The user equipment (110) according to claim 5, wherein the user equipment (110) further comprises
a transmitter (420) configured to send the mobility information to the radio network node (120) serving the user equipment (110).

9. The user equipment (110) according to any one of claims 5-8, wherein the processing circuit (410) further is configured to determine the mobility information based on information about at least one of:
timing advance values relating to a first plurality of previous radio transmissions, wherein the first plurality of previous radio transmissions have been transmitted from the user equipment (110) to the radio network node (120),
transmit power values relating to a second plurality of previous radio transmissions, wherein the second plurality of previous radio transmissions have been transmitted from the user equipment (110) to the radio network node (120), and
at least one of a speed, a position and an acceleration of the user equipment (110).

10. A method for a radio network node (120) for setting a timeout value, indicative of a duration during which a value related to radio transmissions is to be reused by the radio network node (120), wherein the radio transmissions relate to communication between the radio network node (120) and a user equipment (110), wherein the radio network node (120) and the user equipment (110) are comprised in a radio communication system (100), wherein the method comprises:
obtaining (205) a timeout value, wherein the timeout value is based on mobility information indicating mobility of the user equipment (110), wherein the mobility information comprises information about transmit power values relating to a second plurality of previous radio transmissions, wherein the second plurality of previous radio transmissions have been transmitted from the user equipment (110) to the radio network node (120); and
setting (208) the timeout value for the user equipment (110).

11. The method for the radio network node (120) according to claim 10, wherein the mobility information further comprises at least one of:
an indicator indicating that the user equipment is stationary,
information about timing advance values relating to a first plurality of previous radio transmissions, wherein the first plurality of previous radio transmissions have been transmitted from the user equipment (110) to the radio network node (120),
and
a value indicating at least one of a speed, a position and an acceleration of the user equipment,

12. The method for the radio network node (120) according to claim 10, wherein the obtaining (202) of mobility information comprises receiving (203) the mobility information from the user equipment (110) or from a network node (130) handling information about one or more of:
mobility of the user equipment (110),
subscription of the user equipment (110), and
user equipment context of the user equipment (110).

13. A radio network node (120) for setting a timeout value, indicative of a duration during which a value related to radio transmissions is to be reused by the radio network node (120), wherein the radio transmissions relate to communication between the radio network node (120) and a user equipment (110), wherein the user equipment (110) and the radio network node (120) are configured for being comprised in a radio communication system (100), wherein the radio network node (120) comprises
a processing circuit (610) configured to obtain a timeout value, the timeout value being based on mobility information indicating mobility of the user equipment (110), wherein the mobility information comprises information about transmit power values relating to a second plurality of previous radio transmissions, wherein the second plurality of previous radio transmissions have been transmitted from the user equipment (110) to the radio network node (120), wherein the processing circuit (610) further is configured to set the timeout value for the user equipment (110).

14. The radio network node (120) according to claim 13, wherein the mobility information further comprises at least one of:
an indicator indicating that the user equipment is stationary,
information about timing advance values relating to a first plurality of previous radio transmissions, wherein the first plurality of previous radio transmissions have been transmitted from the user equipment (110) to the radio network node (120),
and
a value indicating at least one of a speed, a position and an acceleration of the user equipment.

15. The radio network node (120) according to any one of claims 13-14, wherein the radio network node (120) further comprises
a receiver (620) configured to receive the mobility information from the user equipment (110) or from a network node (130) handling information about at least one of:
mobility of the user equipment (110),
subscription of the user equipment (110), and
user equipment context of the user equipment (110).

## Patentansprüche

1. Verfahren für ein Benutzergerät (110) zum Einstellen eines Zeitüberschreitungswertes, der eine Dauer angibt, während der ein mit Funkübertragungen in Bezug stehender Wert durch das Benutzergerät (110) wiederzuverwenden ist, wobei sich die Funkübertragungen auf Kommunikation zwischen dem Benutzergerät (110) und einem Funknetzknoten (120) beziehen, wobei das Benutzergerät (110) und der Funknetzknoten (120) in einem Funkkommunikationssystem (100) umfasst sind, wobei das Verfahren Folgendes umfasst:
Erlangen (204) eines Zeitüberschreitungswertes, wobei der Zeitüberschreitungswert auf Mobilitätsinformationen basiert, die Mobilität des Benutzergeräts (110) angeben, wobei die Mobilitätsinformationen Informationen über Übertragungsleistungswerte in Bezug auf eine zweite Vielzahl von vorherigen Funkübertragungen umfassen, wobei die zweite Vielzahl von vorherigen Funkübertragungen von dem Benutzergerät (110) an den Funknetzknoten (120) übertragen wurde; und
Einstellen (207) des Zeitüberschreitungswertes.

2. Verfahren für das Benutzergerät (110) nach Anspruch 1, wobei die Mobilitätsinformationen ferner zumindest eines der Folgenden umfassen:
einen Indikator, der angibt, dass das Benutzergerät stationär ist,
Informationen über Zeitvorlaufwerte in Bezug auf eine erste Vielzahl von vorherigen Funkübertragungen, wobei die erste Vielzahl von vorherigen Funkübertragungen von dem Benutzergerät (110) an den Funknetzknoten (120) übertragen wurde,
und
einen Wert, der zumindest eines von einer Geschwindigkeit, einer Position und einer Beschleunigung des Benutzergeräts angibt.

3. Verfahren für das Benutzergerät (110) nach Anspruch 1, ferner umfassend:
Erlangen (201) der Mobilitätsinformationen.

4. Verfahren für das Benutzergerät (110) nach Anspruch 3, wobei das Erlangen (201) der Mobilitätsinformationen Folgendes umfasst:
Bestimmen der Mobilitätsinformationen basierend auf Informationen über zumindest eines der Folgenden:
Zeitvorlaufwerte in Bezug auf eine erste Vielzahl von vorherigen Funkübertragungen, wobei die erste Vielzahl von vorherigen Funkübertragungen von dem Benutzergerät (110) an den Funknetzknoten (120) übertragen wurde,
Übertragungsleistungswerte in Bezug auf eine zweite Vielzahl von vorherigen Funkübertragungen, wobei die zweite Vielzahl von vorherigen Funkübertragungen von dem Benutzergerät (110) an den Funknetzknoten (120) übertragen wurde, und
zumindest eines von einer Geschwindigkeit, einer Position und einer Beschleunigung des Benutzergeräts (110).

5. Benutzergerät (110) zum Einstellen eines Zeitüberschreitungswertes, der eine Dauer angibt, während der ein mit Funkübertragungen in Bezug stehender Wert durch das Benutzergerät (110) wiederzuverwenden ist, wobei sich die Funkübertragungen auf Kommunikation zwischen dem Benutzergerät (110) und einem Funknetzknoten (120) beziehen, wobei das Benutzergerät (110) und der Funknetzknoten (120) dazu konfiguriert sind, in einem Funkkommunikationssystem (100) umfasst zu sein, wobei das Benutzergerät (110) Folgendes umfasst:
eine Verarbeitungsschaltung (410), die dazu konfiguriert ist, einen Zeitüberschreitungswert zu erlangen, wobei der Zeitüberschreitungswert auf Mobilitätsinformationen basiert, die Mobilität des Benutzergeräts (110) angeben, wobei die Mobilitätsinformationen Informationen über Übertragungsleistungswerte in Bezug auf eine zweite Vielzahl von vorherigen Funkübertragungen umfassen, wobei die zweite Vielzahl von vorherigen Funkübertragungen von dem Benutzergerät (110) an den Funknetzknoten (120) übertragen wurde und wobei die Verarbeitungsschaltung (410) ferner dazu konfiguriert ist, den Zeitüberschreitungswert einzustellen.

6. Benutzergerät (110) nach Anspruch 5, wobei die Mobilitätsinformationen ferner zumindest eines der Folgenden umfassen:
einen Indikator, der angibt, dass das Benutzergerät stationär ist,
Informationen über Zeitvorlaufwerte in Bezug auf eine erste Vielzahl von vorherigen Funkübertragungen, wobei die erste Vielzahl von vorherigen Funkübertragungen von dem Benutzergerät (110) an den Funknetzknoten (120) übertragen wurde,
und
einen Wert, der zumindest eines von einer Geschwindigkeit, einer Position und einer Beschleunigung des Benutzergeräts angibt.

7. Benutzergerät (110) nach Anspruch 5, wobei die Verarbeitungsschaltung (410) ferner dazu konfiguriert ist, die Mobilitätsinformationen zu erlangen.

8. Benutzergerät (110) nach Anspruch 5, wobei das Benutzergerät (110) ferner Folgendes umfasst:
einen Sender (420), der dazu konfiguriert ist, die Mobilitätsinformationen an den Funknetzknoten (120) zu senden, der das Benutzergerät (110) bedient.

9. Benutzergerät (110) nach einem der Ansprüche 5-8, wobei die Verarbeitungsschaltung (410) ferner dazu konfiguriert ist, die Mobilitätsinformationen basierend auf Informationen über zumindest eines der Folgenden zu bestimmen:
Zeitvorlaufwerte in Bezug auf eine erste Vielzahl von vorherigen Funkübertragungen, wobei die erste Vielzahl von vorherigen Funkübertragungen von dem Benutzergerät (110) an den Funknetzknoten (120) übertragen wurde,
Übertragungsleistungswerte in Bezug auf eine zweite Vielzahl von vorherigen Funkübertragungen, wobei die zweite Vielzahl von vorherigen Funkübertragungen von dem Benutzergerät (110) an den Funknetzknoten (120) übertragen wurde, und
zumindest eines von einer Geschwindigkeit, einer Position und einer Beschleunigung des Benutzergeräts (110).

10. Verfahren für einen Funknetzknoten (120) zum Einstellen eines Zeitüberschreitungswertes, der eine Dauer angibt, während der ein mit Funkübertragungen in Bezug stehender Wert durch den Funknetzknoten (120) wiederzuverwenden ist, wobei sich die Funkübertragungen auf Kommunikation zwischen dem Funknetzknoten (120) und einem Benutzergerät (110) beziehen, wobei der Funknetzknoten (120) und das Benutzergerät (110) in einem Funkkommunikationssystem (100) umfasst sind, wobei das Verfahren Folgendes umfasst:
Erlangen (205) eines Zeitüberschreitungswertes, wobei der Zeitüberschreitungswert auf Mobilitätsinformationen basiert, die Mobilität des Benutzergeräts (110) angeben, wobei die Mobilitätsinformationen Informationen über Übertragungsleistungswerte in Bezug auf eine zweite Vielzahl von vorherigen Funkübertragungen umfassen, wobei die zweite Vielzahl von vorherigen Funkübertragungen von dem Benutzergerät (110) an den Funknetzknoten (120) übertragen wurde; und
Einstellen (208) des Zeitüberschreitungswertes für das Benutzergerät (110).

11. Verfahren für den Funknetzknoten (120) nach Anspruch 10, wobei die Mobilitätsinformationen ferner zumindest eines der Folgenden umfassen:
einen Indikator, der angibt, dass das Benutzergerät stationär ist,
Informationen über Zeitvorlaufwerte in Bezug auf eine erste Vielzahl von vorherigen Funkübertragungen, wobei die erste Vielzahl von vorherigen Funkübertragungen von dem Benutzergerät (110) an den Funknetzknoten (120) übertragen wurde,
und
einen Wert, der zumindest eines von einer Geschwindigkeit, einer Position und einer Beschleunigung des Benutzergeräts angibt.

12. Verfahren für den Funknetzknoten (120) nach Anspruch 10, wobei das Erlangen (202) von Mobilitätsinformationen Empfangen (203) der Mobilitätsinformationen von dem Benutzergerät (110) oder von einem Netzknoten (130), der Informationen über eines oder mehrere der Folgenden handhabt, umfasst:
Mobilität des Benutzergeräts (110),
Teilnahme des Benutzergeräts (110), und
Benutzergerätkontext des Benutzergeräts (110).

13. Funknetzknoten (120) zum Einstellen eines Zeitüberschreitungswertes, der eine Dauer angibt, während der ein mit Funkübertragungen in Bezug stehender Wert durch den Funknetzknoten (120) wiederzuverwenden ist, wobei sich die Funkübertragungen auf Kommunikation zwischen dem Funknetzknoten (120) und einem Benutzergerät (110) beziehen, wobei das Benutzergerät (110) und der Funknetzknoten (120) dazu konfiguriert sind, in einem Funkkommunikationssystem (100) umfasst zu sein, wobei der Funknetzknoten (120) Folgendes umfasst:
eine Verarbeitungsschaltung (610), die dazu konfiguriert ist, einen Zeitüberschreitungswert zu erlangen, wobei der Zeitüberschreitungswert auf Mobilitätsinformationen basiert, die Mobilität des Benutzergeräts (110) angeben, wobei die Mobilitätsinformationen Informationen über Übertragungsleistungswerte in Bezug auf eine zweite Vielzahl von vorherigen Funkübertragungen umfassen, wobei die zweite Vielzahl von vorherigen Funkübertragungen von dem Benutzergerät (110) an den Funknetzknoten (120) übertragen wurde, wobei die Verarbeitungsschaltung (610) ferner dazu konfiguriert ist, den Zeitüberschreitungswert für das Benutzergerät (110) einzustellen.

14. Funknetzknoten (120) nach Anspruch 13, wobei die Mobilitätsinformationen ferner zumindest eines der Folgenden umfassen:
einen Indikator, der angibt, dass das Benutzergerät stationär ist,
Informationen über Zeitvorlaufwerte in Bezug auf eine erste Vielzahl von vorherigen Funkübertragungen, wobei die erste Vielzahl von vorherigen Funkübertragungen von dem Benutzergerät (110) an den Funknetzknoten (120) übertragen wurde,
und
einen Wert, der zumindest eines von einer Geschwindigkeit, einer Position und einer Beschleunigung des Benutzergeräts angibt.

15. Funknetzknoten (120) nach einem der Ansprüche 13-14, wobei der Funknetzknoten (120) ferner Folgendes umfasst:
einen Empfänger (620), der dazu konfiguriert ist, die Mobilitätsinformationen von dem Benutzergerät (110) oder von einem Netzknoten (130), der Informationen über zumindest eines der Folgenden handhabt, zu empfangen:
Mobilität des Benutzergeräts (110),
Teilnahme des Benutzergeräts (110), und
Benutzergerätkontext des Benutzergeräts (110).

## Revendications

1. Procédé pour un équipement utilisateur (110) pour établir une valeur de temporisation, indicative d'une durée pendant laquelle une valeur liée à des transmissions radio doit être réutilisée par l'équipement utilisateur (110), où les transmissions radio se rapportent à une communication entre l'équipement utilisateur (110) et un noeud de réseau radio (120), où l'équipement utilisateur (110) et le noeud de réseau radio (120) sont compris dans un système de communication radio (100), où le procédé comprend :
l'obtention (204) d'une valeur de temporisation, où la valeur de temporisation est basée sur des informations de mobilité indiquant une mobilité de l'équipement utilisateur (110), où les informations de mobilité comprennent des informations sur des valeurs de puissance de transmission se rapportant à une seconde pluralité de transmissions radio précédentes, où la seconde pluralité de transmissions radio précédentes ont été transmises de l'équipement utilisateur (110) au noeud de réseau radio (120) ; et
l'établissement (207) de la valeur de temporisation.

2. Procédé pour l'équipement utilisateur (110) selon la revendication 1, dans lequel les informations de mobilité comprennent en outre au moins l'un parmi :
un indicateur indiquant que l'équipement utilisateur est stationnaire ;
des informations sur des valeurs d'avance de positionnement temporel se rapportant à une première pluralité de transmissions radio précédentes, où la première pluralité de transmissions radio précédentes ont été transmises de l'équipement utilisateur (110) au noeud de réseau radio (120),
et
une valeur indiquant au moins l'une parmi une vitesse, une position et une accélération de l'équipement utilisateur.

3. Procédé pour l'équipement utilisateur (110) selon la revendication 1, comprenant en outre :
l'obtention (201) des informations de mobilité.

4. Procédé pour l'équipement utilisateur (110) selon la revendication 3, dans lequel l'obtention (201) des informations de mobilité comprend
la détermination des informations de mobilité sur la base d'informations sur au moins l'une parmi :
des valeurs d'avance de positionnement temporel se rapportant à une première pluralité de transmissions radio précédentes,
où la première pluralité de transmissions radio précédentes ont été transmises de l'équipement utilisateur (110) au noeud de réseau radio (120),
des valeurs de puissance de transmission se rapportant à une seconde pluralité de transmissions radio précédentes, où la seconde pluralité de transmissions radio précédentes ont été transmises de l'équipement utilisateur (110) au noeud de réseau radio (120), et
au moins l'une parmi une vitesse, une position et une accélération de l'équipement utilisateur (110).

5. Equipement utilisateur (110) pour établir une valeur de temporisation, indicative d'une durée pendant laquelle une valeur liée à des transmissions radio doit être réutilisée par l'équipement utilisateur (110), où les transmissions radio se rapportent à une communication entre l'équipement utilisateur (110) et un noeud de réseau radio (120), où l'équipement utilisateur (110) et le noeud de réseau radio (120) sont configurés pour être compris dans un système de communication radio (100), où l'équipement utilisateur (110) comprend un circuit de traitement (410) configuré pour obtenir une valeur de temporisation, où la valeur de temporisation est basée sur des informations de mobilité indiquant une mobilité de l'équipement utilisateur (110), où les informations de mobilité comprennent des informations sur des valeurs de puissance de transmission se rapportant à une seconde pluralité de transmissions radio précédentes, où la seconde pluralité de transmissions radio précédentes ont été transmises de l'équipement utilisateur (110) au noeud de réseau radio (120), et où le circuit de traitement (410) est en outre configuré pour établir la valeur de temporisation.

6. Equipement utilisateur (110) selon la revendication 5, dans lequel les informations de mobilité comprennent en outre au moins l'un parmi :
un indicateur indiquant que l'équipement utilisateur est stationnaire,
des informations sur des valeurs d'avance de positionnement temporel se rapportant à une première pluralité de transmissions radio précédentes, où la première pluralité de transmissions radio précédentes ont été transmises de l'équipement utilisateur (110) au noeud de réseau radio (120), et
une valeur indiquant au moins l'une parmi une vitesse, une position et une accélération de l'équipement utilisateur.

7. Equipement utilisateur (110) selon la revendication 5, dans lequel le circuit de traitement (410) est en outre configuré pour obtenir les informations de mobilité.

8. Equipement utilisateur (110) selon la revendication 5, dans lequel l'équipement utilisateur (110) comprend en outre un transmetteur (420) configuré pour envoyer les informations de mobilité au noeud de réseau radio (120) desservant l'équipement utilisateur (110).

9. Equipement utilisateur (110) selon l'une quelconque des revendications 5 à 8, dans lequel le circuit de traitement (410) est en outre configuré pour déterminer les informations de mobilité sur la base d'informations sur au moins l'une parmi :
des valeurs d'avance de positionnement temporel se rapportant à une première pluralité de transmissions radio précédentes,
où la première pluralité de transmissions radio précédentes ont été transmises de l'équipement utilisateur (110) au noeud de réseau radio (120),
des valeurs de puissance de transmission se rapportant à une seconde pluralité de transmissions radio précédentes, où la seconde pluralité de transmissions radio précédentes ont été transmises de l'équipement utilisateur (110) au noeud de réseau radio (120), et
au moins l'une parmi une vitesse, une position et une accélération de l'équipement utilisateur (110).

10. Procédé pour un noeud de réseau radio (120) pour établir une valeur de temporisation, indicative d'une durée pendant laquelle une valeur liée à des transmissions radio doit être réutilisée par le noeud de réseau radio (120), où les transmissions radio se rapportent à une communication entre les noeud de réseau radio (120) et un équipement utilisateur (110), où le noeud de réseau radio (120) et l'équipement utilisateur (110) sont compris dans un système de communication radio (100), où le procédé comprend :
l'obtention (205) d'une valeur de temporisation, où la valeur de temporisation est basée sur des informations de mobilité indiquant une mobilité de l'équipement utilisateur (110), où les informations de mobilité comprennent des informations sur des valeurs de puissance de transmission se rapportant à une seconde pluralité de transmissions radio précédentes, où la seconde pluralité de transmissions radio précédentes ont été transmises de l'équipement utilisateur (110) au noeud de réseau radio (120) ; et
l'établissement (208) de la valeur de temporisation pour l'équipement utilisateur (110).

11. Procédé pour le noeud de réseau radio (120) selon la revendication 10, dans lequel les informations de mobilité comprennent en outre au moins l'un parmi :
un indicateur indiquant que l'équipement utilisateur est stationnaire ;
des informations sur des valeurs d'avance de positionnement temporel se rapportant à une première pluralité de transmissions radio précédentes, où la première pluralité de transmissions radio précédentes ont été transmises de l'équipement utilisateur (110) au noeud de réseau radio (120), et
une valeur indiquant au moins l'une parmi une vitesse, une position et une accélération de l'équipement utilisateur.

12. Procédé pour le noeud de réseau radio (120) selon la revendication 10, dans lequel l'obtention (202) d'informations de mobilité comprend la réception (203) des informations de mobilité en provenance de l'équipement utilisateur (110) ou d'un noeud de réseau (130) prenant en charge des informations sur un ou plusieurs parmi :
une mobilité de l'équipement utilisateur (110),
un abonnement de l'équipement utilisateur (110), et
un contexte d'équipement utilisateur de l'équipement utilisateur (110).

13. Noeud de réseau radio (120) pour établir une valeur de temporisation, indicative d'une durée pendant laquelle une valeur liée à des transmissions radio doit être réutilisée par le noeud de réseau radio (120), où les transmissions radio se rapportent à une communication entre les noeud de réseau radio (120) et un équipement utilisateur (110), où l'équipement utilisateur (110) et le noeud de réseau radio (120) sont configurés pour être compris dans un système de communication radio (100), où le noeud de réseau radio (120) comprend un circuit de traitement (610) configuré pour obtenir une valeur de temporisation, la valeur de temporisation étant basée sur des informations de mobilité indiquant une mobilité de l'équipement utilisateur (110), où les informations de mobilité comprennent des informations sur des valeurs de puissance de transmission se rapportant à une seconde pluralité de transmissions radio précédentes, où la seconde pluralité de transmissions radio précédentes ont été transmises de l'équipement utilisateur (110) au noeud de réseau radio (120), où le circuit de traitement (610) est en outre configuré pour établir la valeur de temporisation pour l'équipement utilisateur (110).

14. Noeud de réseau radio (120) selon la revendication 13, dans lequel les informations de mobilité comprennent en outre au moins l'un parmi :
un indicateur indiquant que l'équipement utilisateur est stationnaire ;
des informations sur des valeurs d'avance de positionnement temporel se rapportant à une première pluralité de transmissions radio précédentes, où la première pluralité de transmissions radio précédentes ont été transmises de l'équipement utilisateur (110) au noeud de réseau radio (120), et
une valeur indiquant au moins l'une parmi une vitesse, une position et une accélération de l'équipement utilisateur.

15. Noeud de réseau radio (120) selon l'une quelconque des revendications 13 à 14, dans lequel le noeud de réseau radio (120) comprend en outre
un récepteur (620) configuré pour recevoir les informations de mobilité en provenance de l'équipement utilisateur (110) ou d'un noeud de réseau (130) prenant en charge des informations sur au moins l'un parmi :
une mobilité de l'équipement utilisateur (110),
un abonnement de l'équipement utilisateur (110), et
un contexte d'équipement utilisateur de l'équipement utilisateur (110).
